# EUROPÄISCHE PATENTSCHRIFT

(11) **EP 0 603 609 B1**
(45) Veröffentlichungstag und Bekanntmachung des Hinweises auf die Patenterteilung: **12.03.1997**
(21) Anmeldenummer: 93119510.1
(22) Anmeldetag: 03.12.1993
(51) Int. Cl.: H02G 3/06, H01R 13/52, H01R 13/58, H01R 13/502

(54) **Vorrichtung zum Verbinden eines elektrischen Steckverbinders mit einem Rillrohr**
Device for connecting an electrical connector to a corrugated tube
Dispositif de liaison d'un connecteur électrique à un tuyau ondulé

(30) Priorität: 24.12.1992 DE 4244212
(43) Veröffentlichungstag der Anmeldung: 29.06.1994
(73) Patentinhaber: Delphi Automotive Systems Deutschland GmbH, D-42369 Wuppertal (DE)
(72) Erfinder: Hohmann, Petra, D-42369 Wuppertal (DE); Jorroch, Waldemar, D-42897 Remscheid (DE); Osthoff, Hans Günter, Dipl.-Ing., D-45549 Sprockhövel (DE)
(74) Vertreter: Priebisch, Rüdiger

(56) Entgegenhaltungen:
- FR-A- 2 592 235
- US-A- 4 711 472
- US-A- 4 888 453

## Beschreibung

Die Erfindung betrifft eine Vorrichtung zum Verbinden eines elektrischen Steckverbinders mit einem Rillrohr, das mindestens eine elektrische Leitung aufnimmt, die mit einer Dichtung im hinteren Teil des Steckverbinders in diesen eingeführt, dort mit einem Steckkontakt fest verbunden ist und von einem axial verrastend aufgeschobenen Sperrglied festgehalten wird, das mit mindestens einem axialen Vorsprung auf die Dichtung drückt.

Es ist bei Steckverbindern der genannten Art bekannt, das mit der elektrischen Leitung verbundene Kontaktteil auch zur Befestigung der Dichtung an der Leitung zu benutzen. Wenn das Kontaktteil zusammen mit der Dichtung und der Leitung in die Kontaktkammer des Verbinders eingeschoben wird, verhakt sich in der Regel das Kontaktteil mittels Widerhaken, Vorsprüngen oder dergleichen im im Gehäuse, so daß das Kontaktteil einem Herausziehen widersteht. Zusätzlich kann vom hinteren Teil des Steckverbinders her ein Sperrglied eingeschoben werden, das mit Vorsprüngen hinter der Dichtung zu liegen kommt und als zusätzliche Verriegelung oder Sicherung des Kontaktteils bzw. der Dichtung dient, vgl. z.B. US-PS 4 832 616.

Es ist desweiteren bekannt, geschlitzte Rillrohre über T-Stücke miteinander zu verbinden und hierbei die T-Teile halbschalenförmig auszubilden und axial mit den Rillrohren zu verbinden, vgl. z.B. US-PS 3 711 633 und US-A-4 888 453.

Der Erfindung liegt das Bestreben zugrunde, die genannten Steckverbinder in vorteilhafter Weise bei einer Verdrahtung mit den genannten Rillrohren zu verwenden.

Die Erfindung sieht hierzu eine Vorrichtung gemäß Patentanspruch 1 vor.

Die erfindungsgemäße Kappe übernimmt zwei Funktionen: sie wirkt als zusätzliche Sicherung (Sperrglied) für den Steckkontakt bzw. die Dichtung und ersetzt damit den bisherigen Verriegelungskamm. Sie verbindet desweiteren das Rillrohr zugfest mit dem Steckverbinder und bietet dadurch zusätzlich eine indirekte Zugentlastung des bzw. der im Rillrohr liegenden Kabels bzw. Kabel. Die Verlegung des bzw. der Kabel im Rillrohr wird nicht behindert, sondern kann zügig geschehen. Schließlich bildet die Kappe einen gelungenen Übergang vom geschlitzten Rillrohr zum Steckverbinder, und zwar sowohl in technisch wirkungsvoller Weise als auch in optisch gefälliger Form.

Die Merkmale der Unteransprüche sind gut geeignet, die beiden genannten Funktionen der Kappe zu unterstützen und zu verbessern. Die Erfindung ist sowohl bei einpoligen als auch bei zwei- oder mehrpoligen Verbindern sinngemäß anwendbar.

In der Zeichnung ist ein Ausführungsbeispiel der Erfindung dargestellt, das im nachfolgenden näher beschrieben wird.

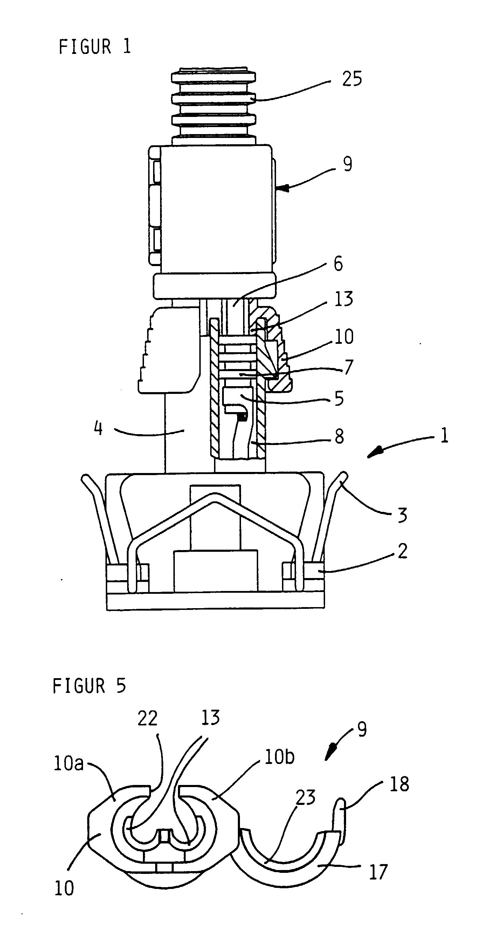

- Figur 1: zeigt einen Steckverbinder, der mit Hilfe einer Kappe mit einem Rillrohr verbunden ist, teilweise aufgeschnitten, so daß ein Steckkontakt, eine Dichtung und eine Leitung sichtbar sind.
- Figur 2: zeigt einen Teil der Vorrichtung nach Figur 1 mit Sicht auf die Verschlußvorrichtung, mittels der die Halbschalen der Kappe verschlossen sind.
- Figur 3: zeigt die Vorrichtung nach Figur 2 in geöffneter Form, ohne Innenteile.
- Figur 4: zeigt die Kappe gemäß Figur 3 im Schnitt.
- Figur 5: zeigt die Kappe gemäß Figur 4 von unten gesehen.

Der elektrische Steckverbinder 1 setzt sich zusammen aus einem vorderen Gehäuseteil 2 aus Kunststoff mit einer Verriegelungsfeder 3 aus Draht und einem hinteren Gehäuseteil 4 aus Kunststoff. Der Steckverbinder 1 ist zweipolig ausgebildet. Im hinteren Gehäuseteil 4 ist das hintere Ende eines elektrischen Steckkontakts 5 sichtbar, der eine auf einer Leitung 6 aufgeschobene Dichtung 7 festhält und mit der Leitung 6, z.B. mittels Crimpen, fest verbunden ist. Die Dichtung 7 dichtet die Kammer 8 nach außen ab.

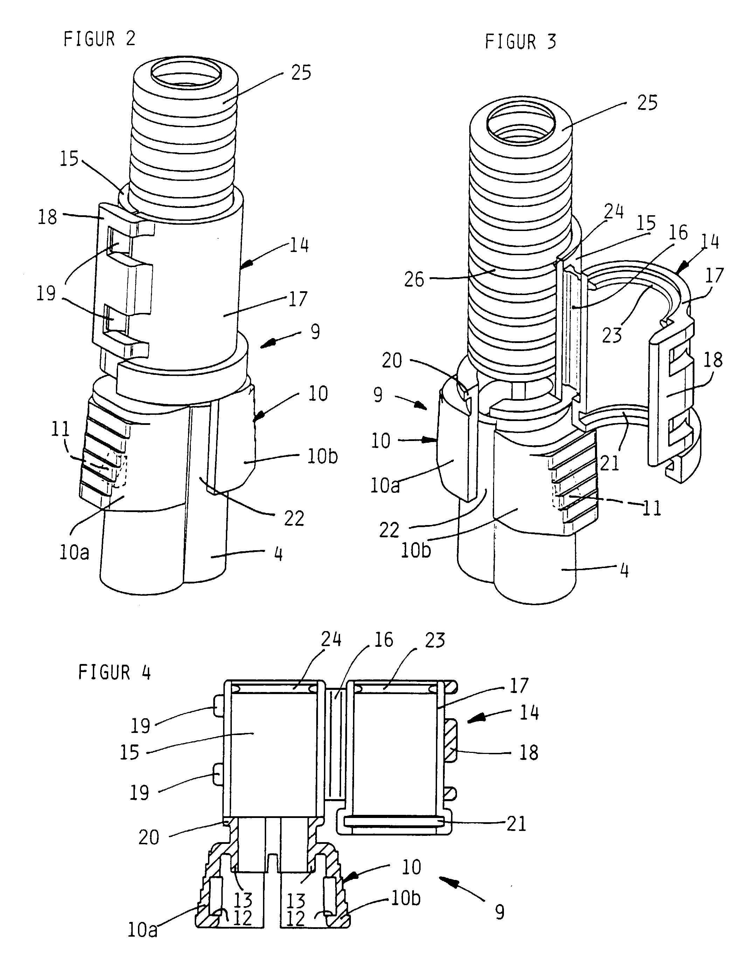

Auf das hintere Gehäuseteil 4 ist eine Kappe 9 aus Kunststoff axial, in Steckrichtung, aufgeschoben. Die Kappe 9 ist im unteren Abschnitt 10 geschlitzt, also zweiflügelig ausgebildet. Die beiden Flügel sind mit 10a und 10b bezeichnet, vgl. Figuren 2 bis 4. Zwei schräge Rasten 11 an der Außenfläche des Gehäuseteils 4, vgl. Figuren 2 und 3, wirken mit Absätzen 12 im Inneren der Flügel 10a und 10b des Abschnitts 10 in axialer Richtung zusammen, so daß die Kappe 9 zugfest mit dem Steckverbinder 1 verbunden ist.

Im Inneren des unteren Abschnitts 10 sind zwei axiale, halbkreisringförmige Vorsprünge 13 angeformt, die in die Kammern 8 ragen und auf die Dichtungen 7 drücken. Da die Kappe 9 zugfest auf dem Steckverbinder 1 sitzt, wirken die Vorsprünge 13 als zusätzliche Sicherung für die Kontaktteile 5 oder zur Kontrolle ihres richtigen, axialen Sitzes.

Dem ersten Abschnitt 10 ist oben ein zweiter Abschnitt 14 angeformt. Der Abschnitt 14 setzt sich zusammen aus einer festen Halbschale 15 und einer daran seitlich über ein Filmscharnier 16 angelenkten zweiten Halbschale 17. Die beiden Halbschalen 15 und 17 können über schnappbare und lösbare Verbindungsglieder 18 und 19 zu einem Rohr ergänzt werden, vgl. Figuren 2 und 3.

Im oberen Bereich des ersten Abschnitts 10 ist ein Vorsprung 20 angeformt, der in eine Rille 21 der zweiten Halbschale 17 eingreifen kann, wenn die Halbschalen 15 und 17 geschlossen sind. Dann überbrückt die Halbschale 17 den auch nach oben offenen Schlitz 22 und stabilisiert die Kappe 9 auch im unteren, ersten Abschnitt 10.

Beiden Halbschalen 15 und 17 sind im oberen Endbereich innen teilringförmige Vorsprünge 23 und 24 angeformt. Wird vor dem Verbinden der beiden Halbschalen 15 und 17 das Rillrohr 25 in die Halbschale 15 eingelegt und die beiden Halbschalen 15 und 17 mit Hilfe der Verbindungsglieder 18 und 19 zu einem Rohr geschlossen, dann greifen die Vorsprünge 23 und 24 in eine Rille 26 des Rillrohres 25 ein. Folglich ist auch das Rillrohr 25 zugfest mit der Kappe 9 verbunden.

## Patentansprüche

1. Vorrichtung zum Verbinden eines elektrischen Steckverbinders (1) mit einem Rillrohr (25), das mindestens eine elektrische Leitung (6) aufnimmt,
- die mit einer Dichtung (7) im hinteren Teil (4) des Steckverbinders (1) in diesen eingeführt,
- dort mit einem Steckkontakt (5) fest verbunden ist
- und von einem axial verrastend aufgeschobenen Sperrglied (9) festgehalten wird, das mit mindestens einem axialen Vorsprung (13) auf die Dichtung (7) drückt,
gekennzeichnet durch folgende Merkmale:
a) Als Sperrglied ist eine Kappe (9) angeordnet.
b) Die Kappe (9) weist einen ersten Abschnitt (10) auf, der über das hintere Ende (4) des Steckverbinders (1) verrastend aufgeschoben ist.
c) Der erste Abschnitt (10) weist mindestens einen axialen Vorsprung (13) auf, der in das hintere Ende (4) des Steckverbinders (1) ragt und auf die Dichtung (7) drückt.
d) Die Kappe (9) weist einen zweiten Abschnitt (14) auf, der aus zwei Halbschalen (15, 17) besteht.
e) Die erste Halbschale (15) ist fest mit dem ersten Abschnitt (10) verbunden.
f) Die zweite Halbschale (17) ist mit der ersten Halbschale (15) über ein axial verlaufendes Scharnier (16) verbunden.
g) Das Ende der zweiten Halbschale (17) hat mindestens ein Verbindungsglied (18), das mit einem Verbindungsglied (19) an der ersten Halbschale (15) zusammenwirken kann, so daß die Halbschalen (15, 17) ein geschlossenes Rohr bilden.
h) Der zweite Abschnitt (14) weist mindestens einen mindestens teilringförmigen Vorsprung (23, 24) auf, der beim Verbinden der beiden Halbschalen (15, 17) über das Rillrohr (25) in eine Rille (26) des Rillrohres (25) eingreift.

2. Vorrichtung nach Anspruch 1, dadurch gekennzeichnet, daß an der zweiten Halbschale (17) mindestens eine teilringförmige Rille (21) angeordnet ist, in die nach Verbinden der beiden Halbschalen (15, 17) ein entsprechender äußerer Vorsprung (20) am ersten Abschnitt (10) greift und die zweite Halbschale (17) axial am ersten Abschnitt (10) abstützt.

3. Vorrichtung nach Anspruch 1 oder 2, dadurch gekennzeichnet, daß beide Halbschalen (15, 17) mindestens je einen mindestens teilringförmigen Vorsprung (23, 24) aufweisen, der beim Verbinden der beiden Halbschalen (15, 17) über das Rillrohr (25) in mindestens eine Rille (26) des Rillrohres (25) eingreift.

4. Vorrichtung nach einem der Ansprüche 1 bis 3, dadurch gekennzeichnet, daß der axiale Vorsprung (13) die Form eines halben Kreisringes aufweist (Figur 1).

5. Vorrichtung nach einem der Ansprüche 1 bis 4, dadurch gekennzeichnet, daß die Kappe (9) mit zwei symmetrischen, elastischen Flügeln (10a, 10b) auf das hintere Ende (4) des Steckverbinders (1) über zwei Rasten (11, 12) aufgeschnappt ist.

## Claims

1. A device for connecting an electrical connector (1) to a corrugated tube (25) containing at least one electrical line (6) which
- is inserted into the connector (1) together with a seal (7) in the rear part (4) of the connector (1),
- is fixedly connected there to a plug contact (5),
- and is secured by a retaining member (9) mounted in an axially locking manner and having at least one axial projection (13) pressing against the seal (7),
characterised by the following features:
a) a cap (9) is provided as a retaining member;
b) the cap (9) has a first portion (10) mounted in a locking manner over the rear end (4) of the connector (1);
c) the first portion (10) has at least one axial projection (13) projecting into the rear end (4) of the connector (1) and pressing against the seal (7);
d) the cap (9) has a second portion (14) comprising two half-shells (15, 17);
e) the first half-shell (15) is fixedly connected to the first portion (10);
f) the second half-shell (17) is connected to the first half-shell (15) by an axially extending hinge (16);
g) the end of the second half-shell (17) has at least one connecting member (18) which can co-operate with a connecting member (19) on the first half-shell (15) so that the half-shells (15, 17) form a closed tube;
h) the second portion (14) has at least one at least part-annular projection (23, 24) engaging over the corrugated tube (25) in a groove (26) thereof when the two half-shells (15, 17) are connected.

2. A device according to claim 1, characterised in that at least one part-annular groove (21) is arranged on the second half-shell (17), a corresponding outer projection (20) on the first portion (10) engaging in the groove (21) and axially supporting the second half-shell (17) on the first portion (10) when the two half-shells (15, 17) are connected.

3. A device according to claim 1 or 2, characterised in that the two half-shells (15, 17) each have at least one at least part-annular projection (23, 24) engaging over the corrugated tube (25) in at least one groove (26) thereof when the two half-shells (15, 17) are connected.

4. A device according to any one of claims 1 to 3, characterised in that the axial projection (13) is in the form of a semi-circle (Figure 1).

5. A device according to any one of claims 1 to 4, characterised in that the cap (9) is snapped onto the rear end (4) of the connector (1) via two detents (11, 12) by means of two symmetrical resilient wings (10a, 10b).

## Revendications

1. Dispositif pour réunir un connecteur électrique (1) à un tube ondulé (21) qui loge au moins un conducteur électrique (6),
- qui est introduit dans le connecteur (1) en traversant une garniture d'étanchéité (7) située dans la partie arrière (4) du connecteur,
- qui est relié de façon fixe à un contact d'enfichage (5), et
- est maintenu fermement par un organe de blocage (9) emmanché axialement avec encliquetage et applique une pression à la garniture d'étanchéité (7), par au moins une partie saillante axiale (13),
caractérisé par les caractéristiques suivantes :
a) un capuchon (9) est disposé en tant qu'organe de blocage;
b) le capuchon (9) possède une première section (10) qui est emmanchée, avec encliquetage, sur l'extrémité arrière (4) du connecteur (1);
c) la première section (10) comporte au moins une partie saillante axiale (13) qui pénètre dans l'extrémité intérieure (4) du connecteur (1) et appuie sur la garniture d'étanchéité (6);
d) le capuchon (9) possède une seconde section (14) qui est constituée de deux demi-coques (15,17);
e) la première demi-coque (15) est reliée de façon fixe à la première section (10);
f) la seconde demi-coque (14) est reliée à la première demi-coque (15) par l'intermédiaire d'une charnière axiale (16);
g) l'extrémité de la seconde demi-coque (17) possède au moins un organe de liaison (18) qui peut coopérer avec un organe de liaison (19) situé sur la première demi-coque (15), de sorte que les demi-coques (15,17) forment un tube fermé;
h) la seconde section (14) possède au moins une partie saillante (23,24) au moins en forme d'anneau partiel, qui, lors de la liaison des deux demi-coques (15,17) par l'intermédiaire d'un tube ondulé (25), s'engage dans une gorge (26) du tube ondulé (25).

2. Dispositif selon la revendication 1, caractérisé en ce que sur la seconde demi-coque (17) est prévue au moins une gorge de forme partiellement annulaire dans laquelle une partie saillante extérieure correspondante (20) présente sur la première section (10) s'engage après réunion des demi-coques (15,17), et que la seconde demi-coque (17) prend appui axialement sur la première section (10).

3. Dispositif selon la revendication 1 ou 2, caractérisé en ce que les deux demi-coques (15,17) possèdent au moins chacune une partie saillante (23,24) au moins de forme partiellement annulaire qui s'engage, par l'intermédiaire du tube ondulé (24), dans au moins une gorge (26) du tube ondulé (25), lors de la réunion des deux demi-coques (15,17).

4. Dispositif selon l'une des revendications 1 à 3, caractérisé en ce que la partie saillante axiale (13) possède la forme d'un demi-anneau circulaire (figure 1).

5. Dispositif selon l'une des revendications 1 à 4, caractérisé en ce que le capuchon (9) est encliqueté au moyen de deux ailes élastiques symétriques (10a,10b) sur l'extrémité arrière (4) du connecteur (1), par l'intermédiaire de deux éléments d'encliquetage (11,12).
